# EUROPEAN PATENT SPECIFICATION

(11) **EP 4 386 949 B1**
(45) Date of publication and mention of the grant of the patent: **08.04.2026**
(21) Application number: 23860888.9
(22) Date of filing: 30.08.2023
(51) Int. Cl.: H01M 50/148, H01M 10/613, H01M 10/647, H01M 10/6551, H01M 10/653, H01M 50/249, H01M 50/20, H01M 50/211

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 31.08.2022 KR 20220110372; 31.08.2022 KR 20220110373; 24.05.2023 KR 20230067251
(43) Date of publication of application: 19.06.2024
(73) Proprietor: LG Energy Solution, Ltd., Seoul 07335 (KR)
(72) Inventor: PARK, Eun-Kyung, Daejeon 34122 (KR)
(74) Representative: Plasseraud IP
(86) International application number: PCT/KR2023/012918
(87) International publication number: WO 2024/049212

(56) References cited:
- WO-A1-2022/149968
- CN-A- 112 467 285
- CN-A- 114 072 962
- CN-U- 205 657 144
- KR-A- 20210 130 445
- KR-B1- 102 424 400
- KR-B1- 102 424 400

## Description

### TECHNICAL FIELD

The present application claims priority to Korean Patent Application No. 10-2022-0110372 filed on August 31, 2022, Korean Patent Application No. 10-2022-0110373 filed on August 31, 2022, and Korean Patent Application No. 10-2023-0067251 filed on May 24, 2023.

The present disclosure relates to a battery pack and a vehicle including the same, and more specifically, to a battery pack manufactured in the cell to pack method and a vehicle including the same.

### BACKGROUND ART

In general, secondary batteries refer to batteries that can be repeatedly charged and discharged, such as lithium-ion batteries, lithium polymer batteries, nickel cadmium batteries, nickel hydrogen batteries, nickel-zinc batteries, and the like. The output voltage of a battery cell, which corresponds to the basic unit of charge/discharge of these secondary batteries, is approximately 2.5 V to 4.2 V.

Recently, as secondary batteries have been applied to devices that require high output voltage and large charging capacity, such as electric vehicles or energy storage systems (ESSs), a battery module is formed by connecting a plurality of battery cells in series or in parallel, and a battery pack manufactured by connecting multiple battery modules thus formed in series or in parallel again is widely used.

However, since existing technology forms a battery module by accommodating battery cells in a box-shaped metal case and then manufactures a battery pack by accommodating these battery modules in the battery pack case again, there is a problem that the weight and volume of the entire battery pack increases and the energy density of the battery pack decreases.

WO2022/149968 describes a battery pack comprising: a battery cell assembly comprising a plurality of battery cells; a bus bar assembly provided at the upper side of the battery cell assembly; a heat sink that is spaced apart from the bus bar assembly by a predetermined distance and supports the lower end portions of the plurality of battery cells; and a heat conduction member that fills the spaces between the plurality of battery cells on the upper side of the heat sink.

KR102424400 describes a battery module having a heat-shrinkable tube.

### DISCLOSURE

### Technical Problem

The present disclosure is designed to solve the problems of the related art, and therefore the present disclosure is directed to providing a battery pack that may reduce the overall weight and volume of the battery pack and increase the energy density of the battery pack, and a vehicle including the same.

In addition, the present disclosure is directed to providing a battery pack that may simplify the assembly process by facilitating the handling and mounting of the battery cells, and reduce manufacturing costs by simplifying and lightening the structures required to mount the battery cells while preventing damage to the battery cells, in the process of manufacturing a battery pack including multiple battery cells, and a vehicle including the same.

In addition, the present disclosure is directed to providing a battery pack that may improve at least one of the coupling properties, fixability, and thermal conductivity of battery cells to the pack case, and a vehicle including the same.

### Technical Solution

According to one aspect of the present disclosure, there may be provided a battery pack including a plurality of pouch-type battery cells; a pack case accommodating the plurality of pouch-type battery cells in an internal space and provided with a heat sink; and a cell cover that at least partially surrounds and supports at least some of the pouch-type battery cells among the plurality of pouch-type battery cells in the internal space of the pack case, wherein the heat sink is configured in a structure for pressing the cell cover.

The battery pack includes a support rib formed to protrude from the heat sink to contact the cell cover.

The support rib is configured to support the cell cover seated on the heat sink by pressing it from the outside to the inside.

In an embodiment, the support rib may be configured to contact the lower end of the side of the cell cover.

In an embodiment, the support rib may have a locking protrusion, and a locking groove that may be fitted with the locking protrusion may be formed on the side of the cell cover.

In an embodiment, the support rib may be provided to be detachable from the heat sink.

In an embodiment, the support rib may be provided in an upper wide and lower narrow structure, and the side of the cell cover may be provided in a form where the lower end thereof is bent outward so as to be in contact with the support rib of the upper wide and lower narrow structure.

In an embodiment, the support rib may be provided in an upper narrow and lower wide structure, and the side of the cell cover may be provided in a form where the lower end thereof is bent inward so as to be in contact with the support rib of the upper narrow and lower wide structure.

In an embodiment, the battery pack may include a concave portion formed to be recessed into the inside of the heat sink, wherein the cell cover may be inserted into the concave portion and pressed by both side walls of the concave portion.

In an embodiment, the concave portion may be filled with a thermal resin.

In an embodiment, both side walls of the concave portion may be configured to support the cell cover by pressing it from the outside to the inside.

In an embodiment, a first inclined portion may be formed on at least one of both side walls of the concave portion, wherein a second inclined portion may be formed on the cell cover to correspond to the first inclined portion.

In an embodiment, the first inclined portion and the second inclined portion may be formed at parts where the side wall and the cell cover are in contact.

In an embodiment, the second inclined portion may be formed to be inclined to face outward from the upper side to the lower side.

In an embodiment, the second inclined portion may be formed to be inclined to face outward from the lower side to the upper side.

Meanwhile, according to another aspect of the present disclosure, there may be provided a vehicle including a battery pack described above.

### Advantageous Effects

Embodiments of the present disclosure have the effect of reducing the overall weight and volume of the battery pack and increasing the energy density of the battery pack.

In addition, in the process of manufacturing a battery pack including multiple battery cells, the assembly process may be simplified by facilitating the handling and mounting of the battery cells, and manufacturing costs may be reduced by simplifying and lightening the structures required to mount the battery cells while preventing damage to the battery cells.

In addition, at least one of the coupling properties, fixability, and thermal conductivity of battery cells to the pack case may be improved.

### DESCRIPTION OF DRAWINGS

FIG. 1 is a schematic perspective view of a battery pack according to a first embodiment of the present disclosure.
FIG. 2 is a perspective view of a battery cell surrounded by a cell cover in a battery pack according to a first embodiment of the present disclosure.
FIG. 3 is an exploded perspective view of the cell cover and the battery cell in FIG. 2.
FIG. 4 is a view schematically showing a partial cross-section of a battery pack according to a first embodiment of the present disclosure.
FIG. 5 is an enlarged view of area A in FIG. 4.
FIGS. 6 to 9 are views showing modified embodiments of FIG. 5, respectively.
FIG. 10 is a view for describing the application position and structure of a support rib of a heat sink in a battery pack according to a first embodiment of the present disclosure.
FIG. 11 is a schematic perspective view of a battery pack according to a second embodiment of the present disclosure.
FIG. 12 is a view schematically showing a partial cross-section of a battery pack according to a second embodiment of the present disclosure.
FIG. 13 is an enlarged view of area B in FIG. 12.
FIGS. 14 and 15 are views showing modified embodiments of FIG. 13, respectively.
FIG. 16 is a view for describing a vehicle including a battery pack according to each embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that modifications could be made thereto without departing from the scope of the invention as defined by the appended claims.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

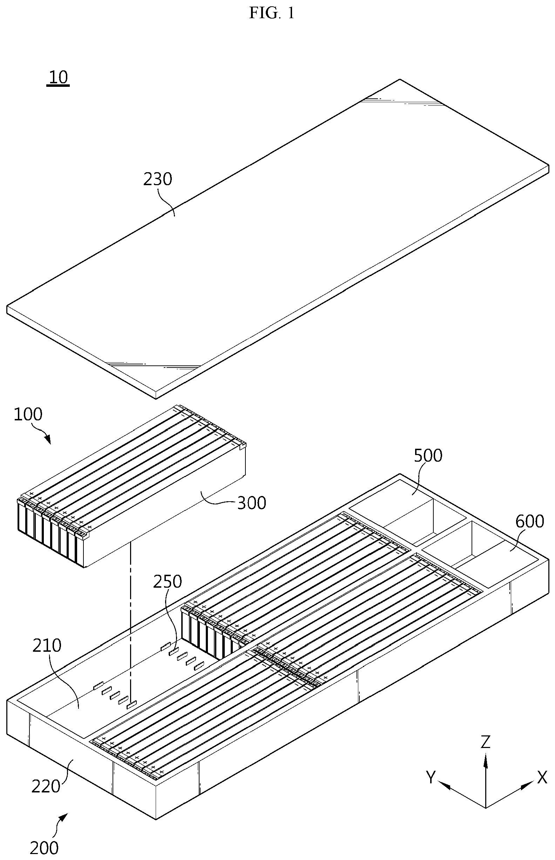

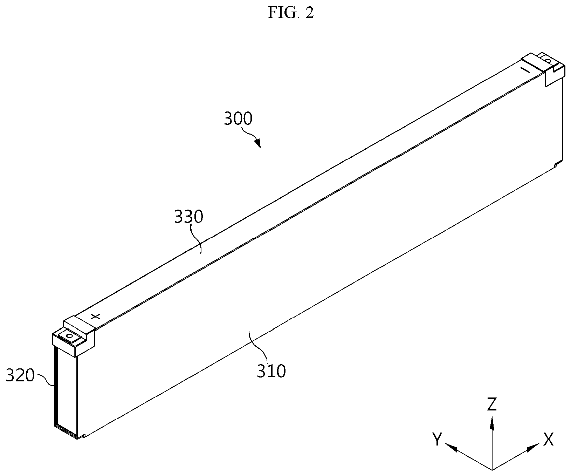

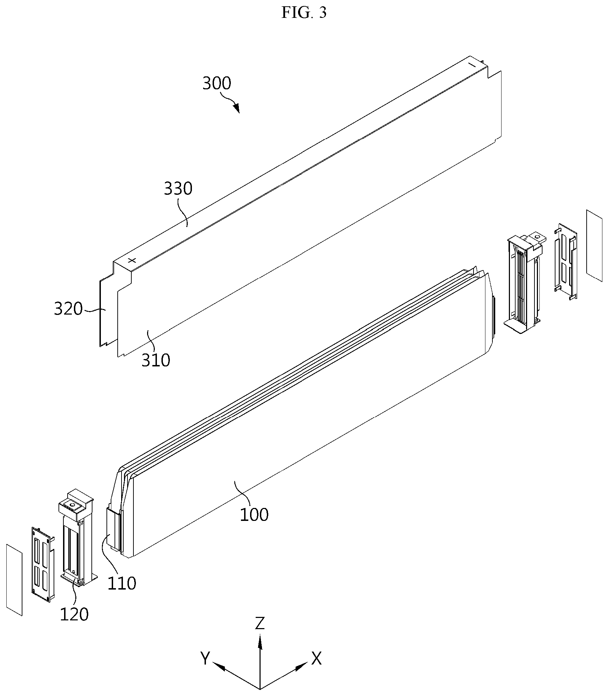

FIG. 1 is a schematic perspective view of a battery pack according to a first embodiment of the present disclosure, FIG. 2 is a perspective view of a battery cell surrounded by a cell cover in a battery pack according to a first embodiment of the present disclosure, and FIG. 3 is an exploded perspective view of the cell cover and the battery cell in FIG. 2.

As described above, battery cells are typically accommodated in a box-shaped metal case to form battery modules, which are then accommodated in a pack case of a battery pack to form a battery pack. However, in this case, there is a problem that the weight and volume of the entire battery pack increases and the energy density of the battery pack decreases.

To solve this problem, the battery pack 10 according to an embodiment of the present disclosure is configured to remove a module case of the battery module and to accommodate the battery cell 100 directly in the pack case 200 of the battery pack 10.

Accordingly, more battery cells 100 may be accommodated in the space occupied by the module case of the battery module within the battery pack 10, thereby increasing space efficiency and improving battery capacity. That is, in the present disclosure, the module case of the battery module may not be included in the configuration.

However, the embodiment using a module case is not completely excluded, and if necessary, the module case provided in the battery module may also be configured to accommodate the pouch-type battery cell 100 of each embodiment of the present disclosure.

Meanwhile, the battery pack 10 according to this embodiment may further include a control module configured to control charge/discharge of the pouch-type battery cells 100. Referring to FIG. 1, this control module may include a battery management system (BMS) 500 and a battery disconnect unit 600, and may be accommodated inside the pack case 200 together with the battery cell 100 and the cell cover 300.

That is, the battery module provided with the pouch-type battery cell 100 coupled to the cell cover 300 in each embodiment of the present disclosure is also within the scope of the present disclosure.

And, even when simply referred to as a battery cell 100 in this specification, the battery cell 100 refers to a pouch-type battery cell 100.

Referring to FIGS. 1 to 3, a battery pack 10 according to a first embodiment of the present disclosure includes a pouch-type battery cell 100, a pack case 200, and a cell cover 300.

The battery cell 100 may include an electrode assembly, an electrolyte, and a pouch exterior material. That is, the battery cell 100 corresponds to a basic unit of charging and discharging, and may be manufactured by accommodating an electrode assembly and an electrolyte material inside a soft metal case and then sealing the metal case. In this case, the electrode assembly may be manufactured by interposing a separator between the positive electrode and the negative electrode.

In addition, electrode leads 110 (see FIG. 3) electrically connected to the electrode assembly may be provided at the front and rear ends of the battery cell 100. This battery cell 100 may be configured in the form of a pouch. This pouch-type battery cell 100 may be included in plurality in the battery pack 10. And, the plurality of pouch-type battery cells 100 may be stacked in at least one direction.

Referring to FIG. 1, the pack case 200 has an empty space formed therein, and the plurality of pouch-type battery cells 100 may be accommodated in this internal space. In particular, in the present disclosure, the pouch-type battery cell 100 may be directly seated on the pack case 200.

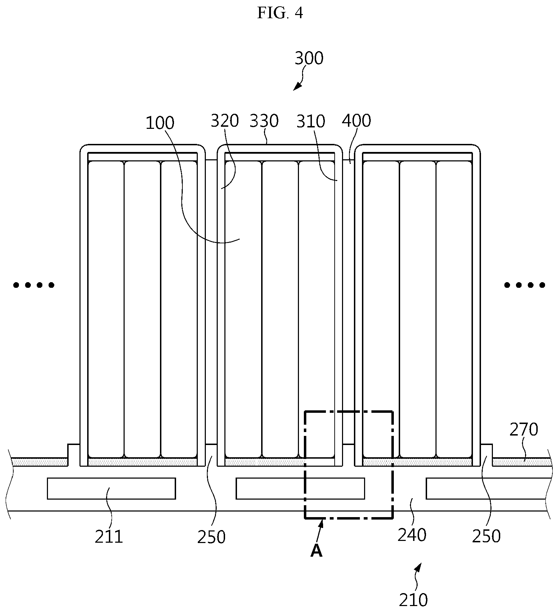

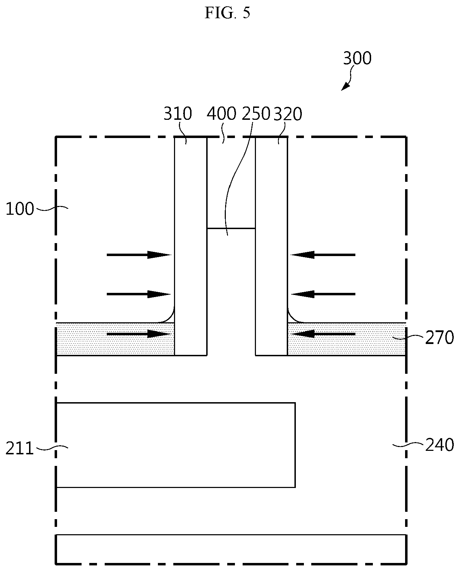

FIG. 4 is a view schematically showing a partial cross-section of a battery pack according to a first embodiment of the present disclosure, and FIG. 5 is an enlarged view of area A in FIG. 4.

Referring to FIGS. 4 and 5, a heat sink 240 may be provided in the pack case 200. The heat sink 240 may be integrally formed into the pack case 200 itself, or a separate heat sink 240 may be coupled to the pack case 200. Hereinafter, the description will center on the case where the heat sink 240 is integrally formed into the pack case 200 itself, but is not limited thereto.

Here, the heat sink 240 refers to a member that absorbs and dissipates heat from another object through direct or indirect thermal contact. The heat sink 240 may be configured in various ways, and for example, it may be provided in a form where a flow path 211 through which cooling water may flow is formed inside the lower frame 210. Accordingly, the overall weight of the pack housing may be reduced and the components may be simplified. However, this is only one embodiment, the structure of the heat sink 240 is not limited thereto, and the structure of the heat sink 240 may be more varied.

Meanwhile, a thermal interface material (TIM) may be interposed between the pack case 200 and the pouch-type battery cell 100, between the pack case 200 and the cell cover 300, or between the pouch-type battery cell 100 and the cell cover 300. The thermal interface material is a material for improving the heat transfer performance of each component between different components.

Here, the thermal interface material may be a thermal resin 270, and a thermal pad may be used as needed. As a result, the cooling performance of the battery pack 10 may be further improved.

Here, the heat sink 240 is configured to press the cell cover 300. Details of this will be described later.

Referring to FIGS. 1 and 2, the pack case 200 may be configured to include a lower frame 210, a side frame 220, and an upper cover 230. The pack case 200 may be made of a plastic or metal material. In addition, the pack case 200 may employ various exterior materials of the battery pack 10 known at the time of filing the present disclosure. And, the pack case 200 may be formed in a box shape.

The plurality of battery cells 100 are seated on the lower frame 210. And, the heat sink 240 described above may be formed in the lower frame 210 (see FIG. 4). The side frame 220 extends upward from the edge of the lower frame 210. The upper cover 230 is coupled to the side frame 220 and covers the side frame 220 and the lower frame 210.

Referring to FIGS. 2 and 3, the cell cover 300 may be provided to at least partially surround at least some of the pouch-type battery cells 100 among the plurality of pouch-type battery cells 100. That is, the cell cover 300 may be configured to partially surround the pouch-type battery cell 100 so that at least one side of the pouch-type battery cell 100 surrounded by the cell cover 300 is exposed to the outside.

The cell cover 300 may be configured to support the pouch-type battery cell 100 in an upright state. **In** general, it is not easy to stack the pouch-type battery cells 100 in a vertically upright form.

However, in the battery pack 10 according to an embodiment of the present disclosure, the cell cover 300 may be configured to maintain an upright state, that is, a standing state, of the surrounded pouch-type battery cells 100 while surrounding one or more pouch-type battery cells 100.

In addition, the cell cover 300 may be integrally formed. In this case, the cell cover 300 may be configured by bending a metal plate with a plate structure. That is, the cell cover 300 may be formed in a shape where one plate is bent.

The cell cover 300 may be made of a material including stainless steel (SUS), which is easy to process, has high corrosion resistance, and has excellent mechanical strength or rigidity. However, the present disclosure is not limited thereto, and the cell cover 300 may be made of various materials other than SUS to ensure rigidity. In particular, the cell cover 300 may be made of a metal material. For example, it may be made of a chromium (CR)-based metal material. In the case of such a metal material, the stacked state of the battery cells 100 may be maintained more stably, and the battery cells 100 may be more safely protected from external impact. In addition, as previously exemplified, when the cell cover 300 is made of a steel material such as SUS, the overall structure may be stably maintained due to its high melting point in the event of a flame from the battery cell 100. In particular, since the steel material has a higher melting point than the aluminum material, its shape may be stably maintained without being melted by the flame ejected from the battery cell 100. Therefore, the effect of preventing or delaying the flame propagation between battery cells 100, the effect of controlling venting, and the like may be excellently secured.

The cell cover 300 may include an insulating coating layer (not shown) on its inner surface. The insulating coating layer (not shown) may be obtained by coating, applying, or attaching any one insulating material of a silicone resin, polyamide, and rubber. According to the configuration of the insulating coating layer of the cell cover 300 according to this embodiment, the insulating coating effect may be maximized with a minimum amount of coating. In addition, the insulating coating layer (not shown) is applied to the inner surface of the cell cover 300, so that the insulation between the battery cell 100 and the cell cover 300 may be enhanced.

And, the cell cover 300 may be configured such that at least one side of the surrounded pouch-type battery cell 100 is exposed toward the bottom surface of the battery pack 10. However, the present disclosure is not limited thereto. In this case, the lower portion of the pouch-type battery cell 100 may be in direct contact with the lower frame 210 of the pack case 200, and the heat released from each pouch-type battery cell 100 may be directly transferred to the pack case 200, thereby improving the cooling performance of the battery cell 100. Here, sufficient cooling performance may be expected even if a separate cooling structure is not provided between the pouch-type battery cell 100 and the pack case 200 due to the structure described above, that is, the pouch-type battery cell 100 is in direct contact with the lower frame 210 of the pack case 200, but in the embodiment of the present disclosure, the heat sink 240 is formed in the lower frame 210 of the pack case 200, thereby having the effect of further improving the cooling performance of the battery cell 100.

Referring to FIG. 1, the cell cover 300 configured to surround at least some of the pouch-type battery cells 100 among the plurality of pouch-type battery cells 100 may be accommodated in the internal space of the pack case 200.

The cell cover 300 may be configured to surround various numbers of pouch-type battery cells 100 together. For example, one cell cover 300 may be configured to surround one pouch-type battery cell 100. Alternatively, one cell cover 300 may be configured to surround two pouch-type battery cells 100 together. Alternatively, one cell cover 300 may be configured to surround three or more pouch-type battery cells 100 together.

Referring to FIGS. 2 and 3, the cell cover 300 may be configured to include a first cover portion 310, a second cover portion 320, and a third cover portion 330.

The first cover portion 310 may be configured to cover one side of at least one battery cell 100 among the plurality of battery cells 100. The first cover portion 310 may be configured to extend in a downward direction from one end of the third cover portion 330. For example, based on FIG. 2, the first cover portion 310 may be configured to extend long in a downward direction from the right end of the third cover portion 330. And, the first cover portion 310 may be configured to surround a wide surface of the battery cell 100 accommodated therein.

The second cover portion 320 may be configured to cover the other side of at least one battery cell 100 among the plurality of battery cells 100. The second cover portion 320 may be positioned to be spaced apart from the first cover portion 310 in the horizontal direction. And, the second cover portion 320 may be configured to extend in a downward direction from the other end of the third cover portion 330. For example, based on FIG. 2, the second cover portion 320 may be configured to extend long in a downward direction from the left end of the third cover portion 330. And, the second cover portion 320 may be configured to surround a wide surface of the battery cell 100 accommodated therein.

The third cover portion 330 connects the first cover portion 310 and the second cover portion 320 and covers the upper end of at least one battery cell 100.

And, at least some of the pouch-type battery cells 100 among the plurality of pouch-type battery cells 100 may be adhered and fixed to the inner surfaces of the first cover portion 310 and the second cover portion 320. The member for adhesion may be thermally conductive. Through this adhesion, the cell cover 300 is firmly coupled to the battery cell 100 and may help to discharge heat generated in the battery cell 100 to the outside of the battery cell 100.

The internal space of the cell cover 300 may be limited by the first cover portion 310, the second cover portion 320, and the third cover portion 330 thereof. And, one or more battery cells 100 may be accommodated in this limited internal space of the cell cover 300.

The cell cover 300 may be configured in an 'n' shape, 'u' shape, or ' 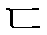 ' shape that surrounds three sides of at least one battery cell 100. And, referring to FIG. 1, the cell cover 300 may be configured such that a plurality of battery cells 100 may be stacked in the horizontal direction in a vertically upright state.

For example, referring to FIG. 1, each cell cover 300 may be configured to surround one or more battery cells 100, and the plurality of battery cells 100 each surrounded by the cell cover 300 may be stacked on each other in the Y-axis direction of FIG. 1. In this case, the configuration in which the plurality of battery cells 100 are stacked side by side in the Y-axis direction in an upright state may be stably maintained by the cell cover 300.

In addition, the cell cover 300 surrounds three sides of at least one battery cell 100, so that busbars or terminals of each unit may be easily located on the side that is not surrounded by each cell cover 300. It can also be said that the battery cell 100 such as the pouch-type battery cell 100 is formed in a substantially hexahedral shape. And, electrode leads 110, that is, a negative electrode lead and a positive electrode lead, may be formed on two of the six sides, respectively. And, the cell cover 300 is provided to surround at least a portion of three of the remaining four sides of the six-sided battery cell 100, except for the two sides where the electrode leads 110 are formed.

Referring to FIGS. 2 and 3 together, a busbar frame 120 may be coupled to the cell cover 300. It may be configured to support a busbar electrically connected to the electrode lead 110 of at least one battery cell 100 covered by the cell cover 300. In this case, the busbar frame 120 may include a terminal electrically connected to the busbar.

Referring to FIGS. 4 and 5, support ribs 250 may be formed on the heat sink 240. In an embodiment, the support rib 250 may be formed to protrude from the heat sink 240, and the support rib 250 may be in contact with the cell cover 300 to press the cell cover 300, such as the first cover portion 310 and the second cover portion 320. Here, the support rib 250 may protrude from the upper surface of the heat sink 240.

The support rib 250 may be configured to support the cell cover 300 seated on the heat sink 240 by pressing it from the outside to the inside. For example, the support rib 250 may be configured to contact the lower end of the side of the cell cover 300 to press the lower end of the side.

In an embodiment according to the present disclosure, the pouch-type battery cell 100 may be accommodated inside the cell cover 300 while being pressed by the first cover portion 310 and the second cover portion 320 of the cell cover 300.

One or more various numbers of pouch-type battery cells 100 may be accommodated in the cell cover 300. For example, as shown in FIG. 4, three pouch-type battery cells 100 may be accommodated in the cell cover 300, but the present disclosure is not limited thereto. In this case, the gap between the first cover portion 310 and the second cover portion 320 corresponds to the total thickness of the three pouch-type battery cells 100, and a slight elastic force may be applied to press the three pouch-type battery cells 100. However, due to assembly tolerances in manufacturing the cell cover 300, for example, the gap between the first cover portion 310 and the second cover portion 320 of the cell cover 300 may be manufactured to be larger than a preset gap, or the lower end of the first cover portion 310 and the lower end of the second cover portion 320 may be manufactured to be further spread outward. In this case, the pouch-type battery cells 100 are not accommodated in a pressed state inside the cell cover 300, which may significantly reduce assemblability, fixability, stability, and the like.

However, as shown in FIGS. 4 and 5, when the support rib 250 is formed on the heat sink 240, the first cover portion 310 or the second cover portion 320 of the cell cover 300 may be supported so as not to be spread outward by the support rib 250. Therefore, it is possible to prevent the cell cover 300 from being spread due to assembly tolerances when manufacturing the cell cover 300, and also to prevent the cell cover 300 from being spread due to swelling of the battery cell 100 that occurs during the charge/discharge process.

In addition, the lower end of the first cover portion 310 or the lower end of the second cover portion 320 and the support rib 250 are configured to be in contact with each other, thereby enabling heat exchange. Here, the support rib 250 may be manufactured integrally with the heat sink 240 or may be manufactured to be directly coupled to the heat sink 240, thereby maintaining a low temperature. Cooling efficiency may be improved by the support rib 250 being in close contact with the first cover portion 310 or the second cover portion 320 of the cell cover 300.

Meanwhile, a compression pad 400 may be disposed in the upper space of the support rib 250 of the heat sink 240. That is, a space is formed by the support rib 250 between one cell cover and another neighboring cell cover 300, and the compression pad 400 may be disposed in this space.

Here, when external impact or vibration occurs, the compression pad 400 has the effect of blocking the external impact or vibration from being transmitted to the battery cell 100 through the cell cover 300, preventing damage caused by mutual friction, and absorbing expansion pressure during swelling of the battery cell 100.

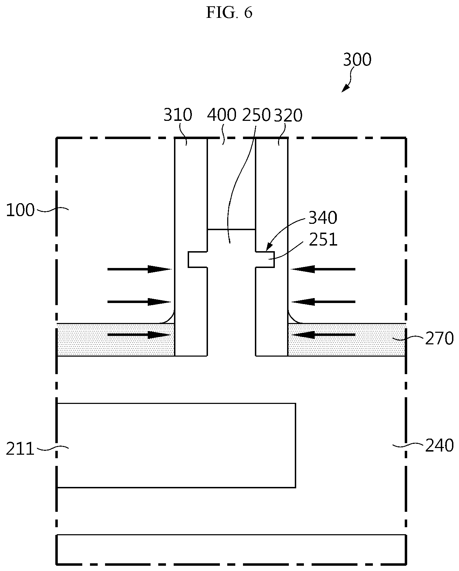

FIGS. 6 to 9 are views showing modified embodiments of FIG. 5, respectively.

Referring to FIG. 6, the support rib 250 of the heat sink 240 may have a locking protrusion 251, and a locking groove 340 that can be fitted with the locking protrusion 251 may be formed on the side of the cell cover 300, for example, the side of the first cover portion 310 or the side of the second cover portion 320.

For example, the locking protrusion 251 may be formed to protrude from the support rib 250 in a direction toward the first cover portion 310 or the second cover portion 320, and the locking groove 340 may be formed concavely in a shape that matches the locking protrusion 251 in the first cover portion 310 or the second cover portion 320. In another modified embodiment, it may also be configured such that a locking protrusion (not shown) is formed on the first cover portion 310 or the second cover portion 320, and a locking groove (not shown) is formed on the support rib 250 of the heat sink 240. In this way, when the locking protrusion 251 and the locking groove 340 are formed on the support rib 250 and the cell cover 300, respectively, the coupling between the cell cover 300 and the heat sink 240 may be achieved more tightly and stably.

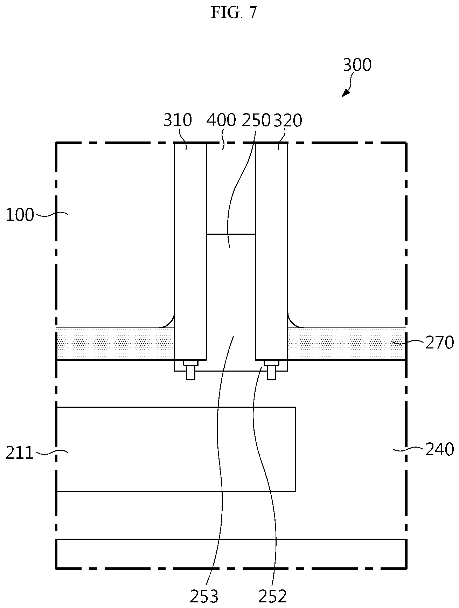

Referring to FIG. 7, the support rib 250 may be configured to be detachable from the heat sink 240. Since the support rib 250 may be required for only some of the plurality of cell covers 300 in some cases, the support rib 250 may be removed at a position where the support rib 250 is not necessary, thereby allowing the support rib 250 to be selectively detachable.

To this end, for example, the support rib 250 may be configured to include a base portion 252 and a support portion 253. The base portion 252 may be coupled to the heat sink 240 in various methods, for example, through a fastening member such as a bolt. However, the fastening member is not limited to bolts, and the fastening method is not limited to fastening members. The support portion 253 protrudes from the base portion 252 and is provided to support the cell cover 300.

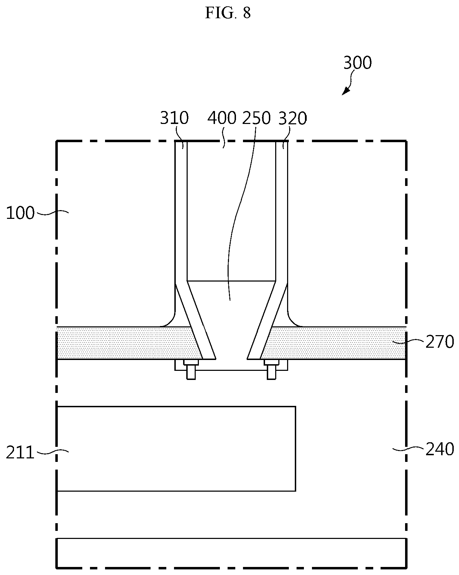

Referring to FIG. 8, the support rib 250 may be provided in an upper wide and lower narrow structure, and the side of the cell cover 300 may be provided in a form where the lower end thereof is bent outward so as to be in contact with the support rib 250 of the upper wide and lower narrow structure. As a result, the first cover portion 310 and the second cover portion 320 of the cell cover 300 may be supported so as not to be spread on both sides, and movement thereof in the vertical direction may be limited, thereby improving the coupling fixability of the cell unit to the heat sink 240.

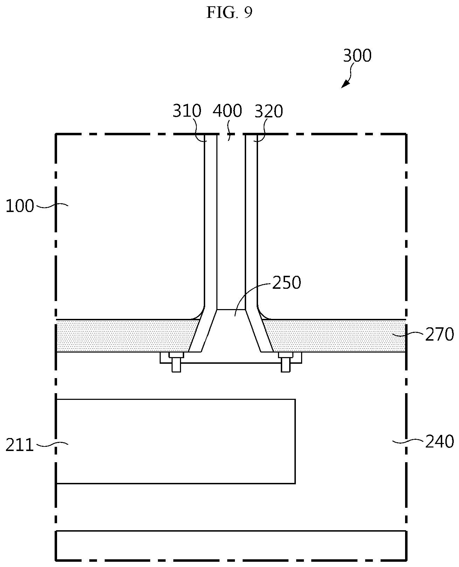

And, referring to FIG. 9, the support rib 250 may be provided in an upper narrow and lower wide structure, and the side of the cell cover 300 may be provided in a form where the lower end thereof is bent inward so as to be in contact with the support rib 250 of the upper narrow and lower wide structure. As a result, the first cover portion 310 and the second cover portion 320 of the cell cover 300 may be supported so as not to be spread on both sides, and when the cell cover 300 is seated on the heat sink 240, the process is easier compared to in other embodiments.

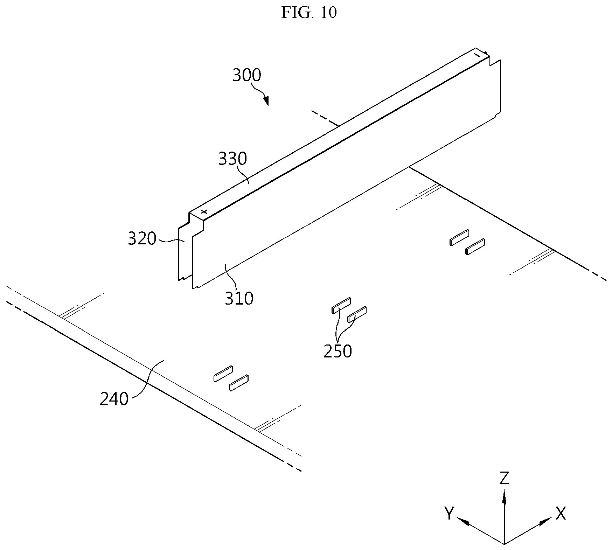

FIG. 10 is a view for describing the application position and structure of a support rib of a heat sink in a battery pack according to a first embodiment of the present disclosure.

The support rib 250 of the heat sink 240 may be configured to support the entire lower end of the first cover portion 310 or the second cover portion 320 of the cell cover 300, or, for example, as shown in FIG. 10, it may also be configured to support only a part of the cell cover 300 along the longitudinal direction of the cell cover 300 on the heat sink 240. For example, in order to support one cell cover 300, at least one support rib 250 may be formed on each of the first cover portion 310 side and the second cover portion 320 side. In FIG. 10, six support ribs 250 are formed, but the present disclosure is not limited thereto, and the number of support ribs 250 may be two, four, or eight, or more.

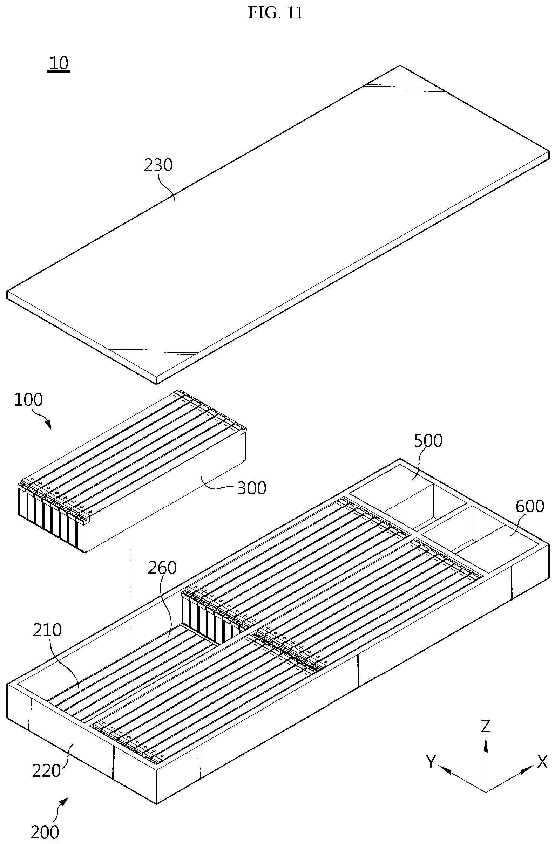

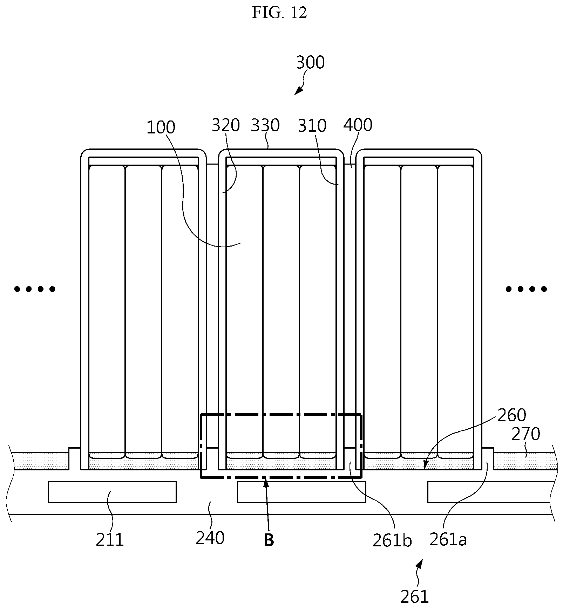

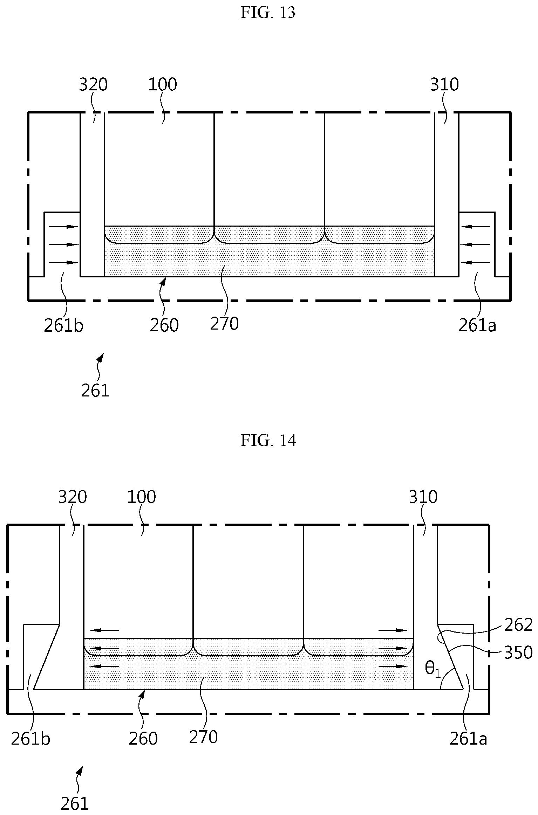

FIG. 11 is a schematic perspective view of a battery pack according to a second embodiment of the present disclosure, FIG. 12 is a view schematically showing a partial cross-section of a battery pack according to a second embodiment of the present disclosure, and FIG. 13 is an enlarged view of area B in FIG. 12.

The second embodiment of the present disclosure is different in configuration from the first embodiment described above in that a concave portion 260, rather than a support rib 250, is formed in the heat sink 240. However, contents common to those described in the first embodiment are replaced by the description of the first embodiment described above. In addition, the content applicable to the first embodiment among the parts described in the second embodiment may be applied to the first embodiment.

Referring to FIGS. 11 to 13, the heat sink 240 provided in the battery pack 10 according to the second embodiment of the present disclosure includes a concave portion 260. Here, the concave portion 260 may be formed to be recessed into the inside of the heat sink 240. And, the concave portion 260 may be provided to have an area corresponding to an area of the lower portion of the cell cover 300. Then, the cell cover 300 may be inserted into the concave portion 260 and pressed by both side walls 261a, 261b of the concave portion 260. The reason and necessity of pressing the cell cover 300 will be replaced by the above description.

Referring to FIGS. 12 and 13, the concave portion 260 may be filled with a thermal resin 270. If the concave portion 260 is filled with the thermal resin 270, the lower side portion of the battery cell 100 may be in contact with the thermal resin 270 when the battery cell 100 surrounded by the cell cover 300 is seated on the lower frame 210.

As such, when the cell unit is seated in the concave portion 260 while the thermal resin 270 is filled inside the concave portion 260, a greater amount of thermal resin 270 may be introduced into the cell cover 300, which has the effect of expanding the contact area between the battery cell 100 and the thermal resin 270.

Here, both side walls 261a, 261b of the concave portion 260 may be configured to support the cell cover 300 by pressing it from the outside to the inside. For example, the lower end of the side of the cell cover 300, that is, the lower end of the first cover portion 310 may be configured to contact the right wall 261a of the side walls 261 of the concave portion 260 with respect to FIG. 13., and the lower end of the second cover portion 320 may be configured to contact the left wall 261b of the side walls 261 of the concave portion 260 with respect to FIG. 13. In this case, the right wall 261a of the concave portion 260 supports the first cover portion 310 by pressing it from the right (outside) to the left (inside), and the left wall 261b of the concave portion 260 supports the second cover portion 320 by pressing it from the left (outside) to the right (inside).

In this way, the first cover portion 310 and the second cover portion 320 of the cell cover 300 are pressed by the side wall 261 of the concave portion 260 provided in the heat sink 240, so that the first cover portion 310 and the second cover portion 320 may be supported without being spread outward. Therefore, it is possible to prevent the cell cover 300 from being spread due to assembly tolerances when manufacturing the cell cover 300, and also to prevent the cell cover 300 from being spread due to swelling of the battery cell 100 that occurs during the charge/discharge process.

Meanwhile, the lower end of the first cover portion 310 or the lower end of the second cover portion 320 and both side walls 261a, 261b of the concave portion 260 are configured to be in contact with each other, thereby enabling heat exchange. Here, both side walls 261a, 261b of the concave portion 260 may be manufactured integrally with the heat sink 240 or may be manufactured to be directly coupled to the heat sink 240, thereby maintaining a low temperature. Cooling efficiency may be improved by both side walls 261a, 261b of the concave portion 260 being in close contact with the first cover portion 310 or the second cover portion 320 of the cell cover 300. That is, the heat of the battery cells 100 is transferred to the cell cover 300 and quickly transferred from the cell cover 300 to the heat sink 240, thereby further increasing cooling efficiency.

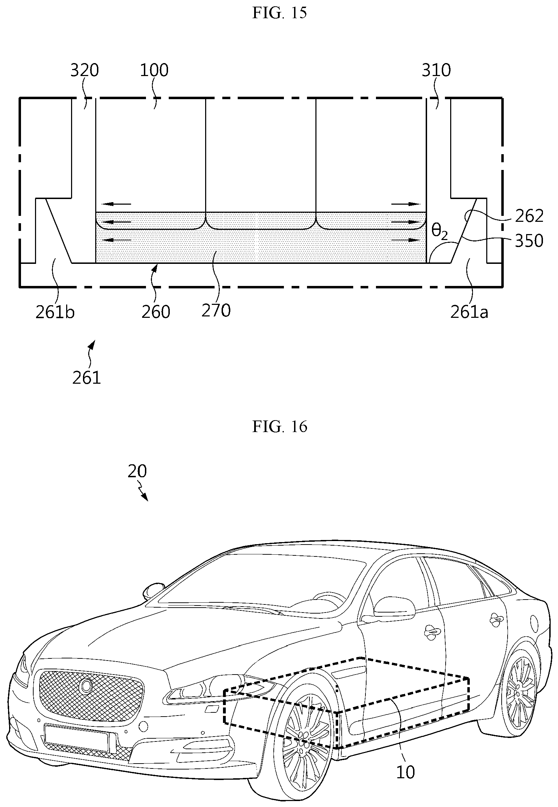

FIGS. 14 and 15 are views showing modified embodiments of FIG. 13, respectively.

Referring to FIGS. 14 and 15, a first inclined portion 262 may be formed on at least one of both side walls 261a, 261b of the concave portion 260 to increase the contact area between the side wall 261 of the concave portion 260 and the first cover portion 310 or the second cover portion 320 of the cell cover 300, and a second inclined portion 350 may be formed on the first cover portion 310 or the second cover portion 320 of the cell cover 300 to correspond to the first inclined portion 262.

For example, the first inclined portion 262 and the second inclined portion 350 may be formed at parts where both side walls 261a, 261b of the concave portion 260 and the first cover portion 310 or the second cover portion 320 of the cell cover 300 are in contact, respectively.

Referring to FIG. 14, the second inclined portion 350 may be formed to be inclined to face outward from the upper side to the lower side. For example, an angle θ₁ formed by the bottom surface of the first cover portion 310 or the second cover portion 320 and the second inclined portion 350 may be configured to be an acute angle. Here, the angle θ₁ may have a size of 30° to 60°, but is not limited thereto.

And, the lower end of the first cover portion 310 or the lower end of the second cover portion 320 of the cell cover 300 may be bent to correspond to each of both side walls 261a, 261b of the concave portion 260, or may be formed with a gradual increase in thickness from the upper side to the lower side so as to match the shape of each of both side walls 261a, 261b of the concave portion 260, as shown in FIG. 14.

Referring to FIG. 14, when the cell cover 300 surrounding the battery cell 100 is seated in the concave portion 260, the lower end of the cell cover 300 may interfere with the upper end of the concave portion 260, and thus the lower end of the first cover portion 310 of the cell cover 300 may be first inserted into the right wall 261a of the concave portion 260 in a diagonal direction, and then the lower end of the second cover portion 320 of the cell cover 300 may be bent inward by applying a slight force to be fitted into the left wall 261b of the concave portion 260.

Alternatively, the cell cover 300 may be coupled to the concave portion 260 by pushing it in the longitudinal direction rather than the vertical direction. That is, first, the longitudinal end of the lower end of the cell cover 300 may be hooked to one side of both side walls 261a, 261b of the concave portion 260, and then the entire lower end of the cell cover 300 may be coupled to both side walls 261a, 261b of the concave portion 260 by moving the lower end of the cell cover 300 in the longitudinal direction of the concave portion 260. That is, the lower end of the cell cover 300 may be coupled to the concave portion 260 as if it is inserted into the concave portion 260 along the rail. In this case, the coupling fixing force may be certainly robust, and the contact area between the lower end of the cell cover 300 and the side wall 261 of the concave portion 260 may also be more expanded, thereby improving the fixability and cooling efficiency compared to the embodiment of FIG. 13.

Referring to FIG. 15, the second inclined portion 350 may be formed to be inclined to face outward from the lower side to the upper side. For example, an angle θ₂ formed by the bottom surface of the first cover portion 310 or the second cover portion 320 and the second inclined portion 350 may be configured to be an obtuse angle. Here, the angle θ₂ may have a size of 120° to 150°, but is not limited thereto.

Here, the lower end of the first cover portion 310 or the lower end of the second cover portion 320 of the cell cover 300 may be bent to correspond to each of both side walls 261a, 261b of the concave portion 260, or may be formed with a gradual increase in thickness from the lower side to the upper side so as to match the shape of each of both side walls 261a, 261b of the concave portion 260, as shown in FIG. 15.

Referring to FIG. 15, the contact area between the lower end of the cell cover 300 and the side wall 261 of the concave portion 260 may be larger than that of the embodiment of FIG. 13, thereby improving cooling efficiency and facilitating the process of coupling the cell cover 300 to the het sink 240. That is, since the second inclined portion 350 of the cell cover 300 according to the modified embodiment of FIG. 15 may slide along the first inclined portion 262 of the side wall 261 of the concave portion 260 to be seated on the concave portion 260, there is an effect of facilitating the process.

By including the above-described configurations, the battery pack 10 according to each embodiment of the present disclosure may accommodate the pouch-type battery cells 100 in the pack case 200 in a space-efficient manner, have a higher energy density compared to the conventional battery pack 10, and simplify the assembly process. In addition, the coupling properties, fixability, and thermal conductivity of the cell cover 300 surrounding the battery cell 100 to the pack case 200 may be improved.

FIG. 16 is a view for describing a vehicle including a battery pack according to each embodiment of the present disclosure.

A vehicle 20 according to an embodiment of the present disclosure may include one or more battery packs 10 according to each embodiment described above. Here, the vehicle 20 includes various vehicles 20 provided to use electricity, such as electric vehicles or hybrid vehicles.

The terms indicating directions as used herein such as upper, lower, left, and right are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims, and all differences within the scope of equivalents should be construed as being included in the present disclosure.

### INDUSTRIAL APPLICABILITY

The present disclosure relates to a battery pack and a vehicle including the same, and is particularly applicable to industries related to secondary batteries.

## Claims

1. A battery pack (10) comprising:
a plurality of pouch-type battery cells (100);
a pack case (200) accommodating the plurality of pouch-type battery cells (100) in an internal space and provided with a heat sink (240); and
a cell cover (300) that at least partially surrounds and supports at least some of the pouch-type battery cells (100) among the plurality of pouch-type battery cells in the internal space of the pack case (200),
**characterised by** a support rib (250) formed to protrude from the heat sink (240) to contact the cell cover (300), the support rib (250) being configured to support the cell cover (300) seated on the heat sink (240) by pressing it from the outside to the inside.

2. The battery pack according to claim 1,
wherein the support rib (250) is configured to contact the lower end of the side of the cell cover (300).

3. The battery pack according to claim 1,
wherein the support rib (250) has a locking protrusion (251), and a locking groove (340) that may be fitted with the locking protrusion (251) is formed on the side of the cell cover (300).

4. The battery pack according to claim 1,
wherein the support rib (250) is provided to be detachable from the heat sink (240).

5. The battery pack according to claim 1,
wherein the support rib (250) is provided in an upper wide and lower narrow structure, and the side of the cell cover (300) is provided in a form where the lower end thereof is bent outward so as to be in contact with the support rib (250) of the upper wide and lower narrow structure.

6. The battery pack according to claim 1,
wherein the support rib (250) is provided in an upper narrow and lower wide structure, and the side of the cell cover is provided in a form where the lower end thereof is bent inward so as to be in contact with the support rib of the upper narrow and lower wide structure.

7. The battery pack according to claim 1,
which comprises a concave portion (260) formed to be recessed into the inside of the heat sink (240),
wherein the cell cover (300) is inserted into the concave portion and pressed by both side walls (261a, 261b) of the concave portion (260).

8. The battery pack according to claim 7,
wherein the concave portion (260) is filled with a thermal resin (270).

9. The battery pack according to claim 7,
wherein both side walls (261a,261b) of the concave portion (260) are configured to support the cell cover (300) by pressing it from the outside to the inside.

10. The battery pack according to claim 7,
wherein a first inclined portion (262) is formed on at least one of both side walls (261a, 261b) of the concave portion (260),
wherein a second inclined portion (350) is formed on the cell cover to correspond to the first inclined portion (262).

11. The battery pack according to claim 8,
wherein the first inclined portion (262) and the second inclined portion (350) are formed at parts where the side wall (261a, 261b) and the cell cover (300) are in contact.

12. The battery pack according to claim 9,
wherein the second inclined portion (350) is formed to be inclined to face outward from the upper side to the lower side.

13. The battery pack according to claim 10,
wherein the second inclined portion (350) is formed to be inclined to face outward from the lower side to the upper side.

14. A vehicle comprising the battery pack according to any one of claims 1 to 13.

## Patentansprüche

1. Batteriepack (10), umfassend:
eine Mehrzahl von beutelartigen Batteriezellen (100);
ein Packgehäuse (200), welches die Mehrzahl von beutelartigen Batteriezellen (100) in einem Innenraum aufnimmt und mit einem Kühlkörper (240) bereitgestellt ist; und
eine Zellenabdeckung (300), welche wenigstens teilweise und wenigstens einige der beutelartigen Batteriezellen (100) unter der Mehrzahl beutelartiger Batteriezellen in dem Innenraum des Packgehäuses (200) umgibt und stützt, **dadurch gekennzeichnet, dass**
eine Stützrippe (250) derart gebildet ist, dass sie von dem Kühlkörper (240) hervorsteht, um die Zellenabdeckung (300) zu kontaktieren, wobei die Stützrippe (250) dazu eingerichtet ist, die Zellenabdeckung (300), welche an dem Kühlkörper (240) sitzt, zu stützen, indem sie diese von außen nach innen drückt.

2. Batteriepack nach Anspruch 1,
wobei die Stützrippe (250) dazu eingerichtet ist, das untere Ende der Seite der Zellenabdeckung (300) zu kontaktieren.

3. Batteriepack nach Anspruch 1,
wobei die Stützrippe (250) einen Verriegelungsvorsprung (251) aufweist, und wobei eine Verriegelungsnut (340), welche mit dem Verriegelungsvorsprung (251) zusammenpassend sein kann, an der Seite der Zellenabdeckung (300) gebildet ist.

4. Batteriepack nach Anspruch 1,
wobei die Stützrippe (250) derart bereitgestellt ist, dass sie von dem Kühlkörper (240) lösbar ist.

5. Batteriepack nach Anspruch 1,
wobei die Stützrippe (250) in einer oben breiten und unten schmalen Struktur bereitgestellt ist, und die Seite der Zellenabdeckung (300) in einer Form bereitgestellt ist, bei welcher das untere Ende davon nach außen gebogen ist, um mit der Stützrippe (250) der oben breiten und unten schmalen Struktur in Kontakt zu sein.

6. Batteriepack nach Anspruch 1,
wobei die Stützrippe (250) in einer oben schmalen und unten breiten Struktur bereitgestellt ist, und die Seite der Zellenabdeckung (300) in einer Form bereitgestellt ist, bei welcher das untere Ende davon nach innen gebogen ist, um mit der Stützrippe (250) der oben schmalen und unten breiten Struktur in Kontakt zu sein.

7. Batteriepack nach Anspruch 1,
welches einen konkaven Abschnitt (260) umfasst, welcher dazu gebildet ist, in das Innere des Kühlkörpers (240) vertieft zu sein,
wobei die Zellenabdeckung (300) in den konkaven Abschnitt (260) eingeführt ist und von beiden Seitenwänden (261a, 261b) des konkaven Abschnitts (260) gedrückt wird.

8. Batteriepack nach Anspruch 7,
wobei der konkave Abschnitt (260) mit einem thermischen Harz (270) gefüllt ist.

9. Batteriepack nach Anspruch 7,
wobei beide Seitenwände (261a, 261b) des konkaven Abschnitts (260) dazu eingerichtet sind, die Zellenabdeckung (300) zu stützen, indem sie sie von außen nach innen drücken.

10. Batteriepack nach Anspruch 7,
wobei ein erster geneigter Abschnitt (262) an wenigstens einer der beiden Seitenwände (261a, 261b) des konkaven Abschnitts (260) gebildet ist, wobei ein zweiter geneigter Abschnitt (350) an der Zellenabdeckung derart gebildet ist, dass er dem ersten geneigten Abschnitt (262) entspricht.

11. Batteriepack nach Anspruch 8,
wobei der erste geneigte Abschnitt (262) und der zweite geneigte Abschnitt (350) an Teilen gebildet sind, an welchen die Seitenwand (261a, 261b) und die Zellenabdeckung (300) in Kontakt stehen.

12. Batteriepack nach Anspruch 9,
wobei der zweite geneigte Abschnitt (350) derart gebildet ist, dass er von der oberen Seite zu der unteren Seite hin nach außen geneigt ist.

13. Batteriepack nach Anspruch 10,
wobei der zweite geneigte Abschnitt (350) derart gebildet ist, dass er von der unteren Seite zu der oberen Seite hin nach außen geneigt ist.

14. Fahrzeug, umfassend den Batteriepack nach einem der Ansprüche 1 bis 13.

## Revendications

1. Bloc-batterie (10) comprenant :
une pluralité de cellules de batterie de type poche (100) ;
un boîtier de bloc (200) accueillant la pluralité de cellules de batterie de type poche (100) dans un espace interne et doté d'un dissipateur thermique (240) ; et
un couvercle de cellule (300) qui entoure et supporte au moins partiellement au moins certaines de la pluralité de cellules de batterie de type poche (100) parmi la pluralité de cellules de batterie de type poche dans l'espace interne du boîtier de bloc (200),
**caractérisé par** une nervure de support (250) formée pour faire saillie depuis le dissipateur thermique (240) pour entrer en contact avec le couvercle de cellule (300), la nervure de support (250) étant configurée pour supporter le couvercle de cellule (300) assis sur le dissipateur thermique (240) en le poussant de l'extérieur vers l'intérieur.

2. Bloc-batterie selon la revendication 1,
dans lequel la nervure de support (250) est configurée pour entrer en contact avec l'extrémité inférieure du côté du couvercle de cellule (300).

3. Bloc-batterie selon la revendication 1,
dans lequel la nervure de support (250) présente une saillie de verrouillage (251), et une rainure de verrouillage (340) qui peut être ajustée avec la saillie de verrouillage (251) est formée sur le côté du couvercle de cellule (300).

4. Bloc-batterie selon la revendication 1,
dans lequel la nervure de support (250) est disposée pour être détachable du dissipateur thermique (240).

5. Bloc-batterie selon la revendication 1,
dans lequel la nervure de support (250) est disposée dans une structure supérieure large et inférieure étroite, et le côté du couvercle de cellule (300) est disposé dans une forme où son extrémité inférieure est courbée vers l'extérieur de manière à être en contact avec la nervure de support (250) de la structure supérieure large et inférieure étroite.

6. Bloc-batterie selon la revendication 1,
dans lequel la nervure de support (250) est disposée dans une structure supérieure étroite et inférieure large, et le côté du couvercle de cellule est disposé dans une forme où son extrémité inférieure est courbée vers l'intérieur de manière à être en contact avec la nervure de support de la structure supérieure étroite et inférieure large.

7. Bloc-batterie selon la revendication 1,
qui comprend une portion concave (260) formée pour être encastrée dans l'intérieur du dissipateur thermique (240),
dans lequel le couvercle de cellule (300) est inséré dans la portion concave et poussé par deux parois latérales (261a, 261b) de la portion concave (260).

8. Bloc-batterie selon la revendication 7,
dans lequel la portion concave (260) est remplie d'une résine thermique (270).

9. Bloc-batterie selon la revendication 7,
dans lequel les deux parois latérales (261a, 261b) de la portion concave (260) sont configurées pour supporter le couvercle de cellule (300) en le poussant de l'extérieur vers l'intérieur.

10. Bloc-batterie selon la revendication 7,
dans lequel une première portion inclinée (262) est formée sur au moins l'une des deux parois latérales (261a, 261b) de la portion concave (260),
dans lequel une seconde portion inclinée (350) est formée sur le couvercle de cellule pour correspondre à la première portion inclinée (262).

11. Bloc-batterie selon la revendication 8,
dans lequel la première portion inclinée (262) et la seconde portion inclinée (350) sont formées au niveau de parties où la paroi latérale (261a, 261b) et le couvercle de cellule (300) sont en contact.

12. Bloc-batterie selon la revendication 9,
dans lequel la seconde portion inclinée (350) est formée pour être inclinée pour être orientée vers l'extérieur depuis le côté supérieur vers le côté inférieur.

13. Bloc-batterie selon la revendication 10,
dans lequel la seconde portion inclinée (350) est formée pour être inclinée pour être orientée vers l'extérieur depuis le côté inférieur vers le côté supérieur.

14. Véhicule comprenant le bloc-batterie selon l'une quelconque des revendications 1 à 13.
